# EUROPÄISCHE PATENTANMELDUNG

(11) **EP 4 772 729 A1**
(43) Veröffentlichungstag der Anmeldung: **08.07.2026**
(21) Anmeldenummer: 25212350.0
(22) Anmeldetag: 30.10.2025
(51) Int. Cl.: F01N 3/28

(54) **MISCHANORDNUNG ZUM MISCHEN VON IN ABGAS EINER BRENNKRAFTMASCHINE EINGESPRITZTEM, FLÜSSIGEM INJEKTIONSMITTEL MIT DEM ABGAS**

(30) Priorität: 03.12.2024 DE 102024135754
(71) Anmelder: Purem GmbH, 66539 Neunkirchen (DE)
(72) Erfinder: Gaiser, Gerd, Reutlingen (DE); Weller, Bernd, Durlangen (DE); Lehr, Tobias, Esslingen (DE); Munk, Florian, Schnittlingen (DE)
(74) Vertreter: Ruttensperger Lachnit Trossin Gomoll

(57) **Zusammenfassung**

Bei einer Mischanordnung zum Mischen von in Abgas (A) einer Brennkraftmaschine eingespritztem Injektionsmittel (R) mit dem Abgas (A) weist eine in einer Mischkammerbaugruppe (20) gebildete Mischkammer (26) eine einen durch die stromaufwärtige Mischkammerbaugruppenwand (22) und die stromabwärtige Mischkammerbaugruppenwand (24) begrenzten ersten Mischkammer-Teilbereich (28) und einen durch die stromaufwärtige Mischkammerbaugruppenwand (22) und die stromabwärtige Mischkammerbaugruppenwand (24) begrenzten zweiten Mischkammer-Teilbereich (30) auf. Eine Injektionsmittel-Abgabeeinheit (42) ist zur Abgabe eines Injektionsmittels (R) in einen Mischkammer-Angrenzungsbereich (27) angeordnet. In Zuordnung zu dem ersten Mischkammer-Teilbereich (28) sind in der stromaufwärtigen Mischkammerbaugruppenwand (22) wenigstens eine erste Eintrittsöffnung (44) und in der stromabwärtigen Mischkammerbaugruppenwand (24) wenigstens eine erste Austrittsöffnung (48) vorgesehen. In Zuordnung zu dem zweiten Mischkammer-Teilbereich (30) sind in der stromaufwärtigen Mischkammerbaugruppenwand (22) wenigstens eine zweite Eintrittsöffnung (46) und in der stromabwärtigen Mischkammerbaugruppenwand (24) wenigstens eine zweite Austrittsöffnung (50) vorgesehen. Bei dem ersten Mischkammer-Teilbereich (28) sind die wenigstens eine erste Eintrittsöffnung (44) und die wenigstens eine erste Austrittsöffnung (48) in der ersten Richtung (R₁) oder/und in der zweiten Richtung (R₂) zueinander versetzt angeordnet. Bei dem zweiten Mischkammer-Teilbereich (30) sind die wenigstens eine zweite Eintrittsöffnung (46) und die wenigstens eine zweite Austrittsöffnung (50) in der ersten Richtung (R₁) oder/und in der zweiten Richtung (R₂) zueinander versetzt angeordnet.

## Beschreibung

Zur Verringerung des Schadstoffanteils in von einer Brennkraftmaschine ausgestoßenem Abgas ist es bekannt, in das in einer Abgasanlage strömende Abgas ein Injektionsmittel einzuspritzen. Dieses Injektionsmittel kann beispielsweise eine Harnstoff/Wasser-Lösung sein, welche in einem stromabwärts folgenden SCR-Katalysator zur Verringerung des Stickoxidanteils im Abgas genutzt wird. Bei einer anderen Ausgestaltungsart kann Kraftstoff, also beispielsweise Diesel, als Injektionsmittel in das Abgas eingespritzt werden, um durch katalytische Umsetzung an einem stromabwärts folgenden Katalysator Reaktionswärme zur Erwärmung des Katalysators oder beispielsweise eines stromabwärts folgenden Partikelfilters zu erzeugen.

Beim Einspritzen eines derartigen Injektionsmittels, wie zum Beispiel Harnstoff/Wasser-Lösung bzw. Diesel, kann ein Problem darin bestehen, dass derartige Injektionsmittel häufig ein Gemisch aus Komponenten mit verschiedenen Siedetemperaturen sind. So haben beispielsweise in Diesel enthaltene Flüssigkeitskomponenten Siedetemperaturen im Bereich von etwa 180 °C bis etwa 430 °C. Dies bedeutet, dass in einem derartigen Injektionsmittel Komponenten mit einer Siedetemperatur enthalten sein können, die über der Abgastemperatur des von einer Brennkraftmaschine ausgestoßenen Abgases liegen kann, und die daher beim Einspritzen in das Abgas wesentlich schlechter in einen gasförmigen Aggregatzustand überführt werden können, als Flüssigkeitskomponenten mit niedriger Siedetemperatur.

Ein weiteres Problem beim Einspritzen eines Injektionsmittels in das von einer Brennkraftmaschine ausgestoßene Abgas kann eine unzureichende bzw. inhomogene Vermischung des Injektionsmittels mit dem Abgas sein. Eine derartige inhomogene Vermischung kann zur Folge haben, dass ein Teil des als Flüssigkeit in das Abgas eingespritzten Injektionsmittels nicht in einen gasförmigen Aggregatzustand überführt wird und somit für eine nachfolgende katalytische Reaktion bzw. Oxidationsreaktion nicht effizient genutzt werden kann.

Es ist die Aufgabe der vorliegenden Erfindung, eine Mischanordnung zum Mischen von in Abgas einer Brennkraftmaschine eingespritztem, flüssigem Reaktionsmittel mit dem Abgas vorzusehen, mit welcher eine effiziente Überführung des Reaktionsmittels in einen gasförmigen Zustand und eine gleichmäßige Durchmischung von Abgas und Reaktionsmittel erreicht wird.

Erfindungsgemäß wird diese Aufgabe gelöst durch eine Mischanordnung zum Mischen von in Abgas einer Brennkraftmaschine eingespritztem, flüssigem Injektionsmittel mit dem Abgas, umfassend:
- eine in Richtung einer Längsachse sich erstreckende, von Abgas in einer Abgas-Hauptströmungsrichtung durchströmbare Abgasführungskomponente, wobei in der Abgasführungskomponente ein von dem Abgas im Wesentlichen in der Abgas-Hauptströmungsrichtung durchströmbares Abgas-Strömungsvolumen gebildet ist,
- eine Mischkammerbaugruppe mit einer eine Mischkammer in dem Abgas-Strömungsvolumen in Richtung stromaufwärts begrenzenden stromaufwärtigen Mischkammerbaugruppenwand und einer die Mischkammer in dem Abgasströmungsvolumen in Richtung stromabwärts begrenzenden stromabwärtigen Mischkammerbaugruppenwand,
- eine Injektionsmittel-Abgabeeinheit zur Abgabe von flüssigem Injektionsmittel in die Mischkammer im Wesentlichen in einer Injektionsmittel-Hauptabgaberichtung entlang einer Injektionsmittel-Abgabelinie,

Bei der erfindungsgemäß aufgebauten Mischanordnung weist die Mischkammer einen durch die stromaufwärtige Mischkammerbaugruppenwand und die stromabwärtige Mischkammerbaugruppenwand begrenzten ersten Mischkammer-Teilbereich und einen durch die stromaufwärtige Mischkammerbaugruppenwand und die stromabwärtige Mischkammerbaugruppenwand begrenzten zweiten Mischkammer-Teilbereich auf, wobei der erste Mischkammer-Teilbereich und der zweite Mischkammer-Teilbereich in einer ersten Richtung im Wesentlichen quer zur Abgas-Hauptströmungsrichtung nebeneinander positioniert sind und in einem Mischkammer-Angrenzungsbereich zueinander offen sind, wobei der Mischkammer-Angrenzungsbereich in einer zur ersten Richtung im Wesentlichen orthogonalen zweiten Richtung im Wesentlichen quer zur Abgas-Hauptströmungsrichtung langgestreckt ist, wobei die Injektionsmittel-Abgabeeinheit zur Abgabe des Injektionsmittels in den Mischkammer-Angrenzungsbereich angeordnet ist, wobei in Zuordnung zu dem ersten Mischkammer-Teilbereich in der stromaufwärtigen Mischkammerbaugruppenwand wenigstens eine erste Eintrittsöffnung und in der stromabwärtigen Mischkammerbaugruppenwand wenigstens eine erste Austrittsöffnung vorgesehen sind und in Zuordnung zu dem zweiten Mischkammer-Teilbereich in der stromaufwärtigen Mischkammerbaugruppenwand wenigstens eine zweite Eintrittsöffnung und in der stromabwärtigen Mischkammerbaugruppenwand wenigstens eine zweite Austrittsöffnung vorgesehen sind, wobei bei dem ersten Mischkammer-Teilbereich die wenigstens eine erste Eintrittsöffnung und die wenigstens eine erste Austrittsöffnung in der ersten Richtung oder/und in der zweiten Richtung zueinander versetzt angeordnet sind und bei dem zweiten Mischkammer-Teilbereich die wenigstens eine zweite Eintrittsöffnung und die wenigstens eine zweite Austrittsöffnung in der ersten Richtung oder/und in der zweiten Richtung zueinander versetzt angeordnet sind.

Durch die Aufgliederung der Mischkammer in zwei in Verbindung miteinander stehende Teilbereiche, welche aus der Injektionsmittel-Abgabeeinheit mit dem einzuspritzenden Injektionsmittel gespeist werden, findet bereits eine Aufteilung des eingespritzten Injektionsmittels auf diese beiden Mischkammer-Teilbereiche bzw. Volumenbereiche der gesamten Mischkammer statt. In jedem der Mischkammer-Teilbereiche wird insbesondere auch durch die Positionierung der jeweiligen Eintrittsöffnungen und Austrittsöffnungen bezüglich einander eine Wirbelströmung erzeugt, welche einerseits dafür sorgt, dass in jedem dieser Mischkammer-Teilbereiche eine effiziente Durchmischung des Injektionsmittels mit dem den jeweiligen Mischkammer-Teilbereich durchströmenden Anteil des Abgasstroms erfolgen kann, während andererseits eine vergleichsweise lange Kontaktdauer des in das Abgas eingespritzten Injektionsmittels mit den die verschiedenen Mischkammer-Teilbereiche begrenzenden Oberflächen der Mischkammerbaugruppenwände aufrechterhalten wird. Dies führt dazu, dass auch für beispielsweise aufgrund höherer Siedetemperaturen schlechter bzw. langsamer in einen gasförmigen Aggregatzustand übergehende Komponenten des flüssigen Injektionsmittels mehr Zeit zur Verfügung steht, um durch Wärmeaufnahme in einen gasförmigen Aggregatzustand überzugehen. Gleichzeitig wird durch die in den Mischkammer-Teilbereichen erzeugten Wirbelströmungen gewährleistet, dass auch unter Schwerkrafteinwirkung sich keine lokalen Ansammlungen von flüssigem Injektionsmittel bilden, so dass das Entstehen von Injektionsmittel-Ablagerungen beispielsweise an den Mischkammerbaugruppenwänden verhindert werden kann.

Das Entstehen effizienter Wirbelströmungen in den Mischkammer-Teilbereichen kann dadurch unterstützt werden, dass die erste Richtung und die zweite Richtung zur Abgas-Hauptströmungsrichtung oder/und zur Längsachse im Wesentlichen orthogonal sind, oder/und dass die Injektionsmittel-Hauptabgaberichtung zur Abgas-Hauptströmungsrichtung oder/und zur Längsachse im Wesentlichen orthogonal ist oder/und im Wesentlichen der zweiten Richtung entspricht.

Für eine im Wesentlichen gleichmäßige Aufteilung des eingespritzten Injektionsmittels auf die beiden Mischkammer-Teilbereiche kann vorgesehen sein, dass der Mischkammer-Angrenzungsbereich im Wesentlichen durch eine Mischkammer-Angrenzungsöffnung gebildet ist, wobei die Mischkammer-Angrenzungsöffnung im Wesentlichen in einer durch die Abgas-Hauptströmungsrichtung und die zweite Richtung aufgespannten und zur ersten Richtung orthogonalen Öffnungsebene liegt.

Dabei kann die Injektionsmittel-Abgabelinie im Wesentlichen in der Öffnungsebene liegen oder/und zur Abgas-Hauptströmungsrichtung im Wesentlichen orthogonal sein.

Um einen das Entstehen von Wirbelströmungen beeinträchtigenden Strömungskurzschluss in den Mischkammer-Teilbereichen zu vermeiden, wird vorgeschlagen, dass die wenigstens eine erste Eintrittsöffnung und die wenigstens eine erste Austrittsöffnung sich in der zweiten Richtung im Wesentlichen nicht überlappen, oder/und dass die wenigstens eine zweite Eintrittsöffnung und die wenigstens eine zweite Austrittsöffnung sich in der zweiten Richtung im Wesentlichen nicht überlappen.

Weiter kann hierfür vorgesehen sein, dass die wenigstens eine erste Eintrittsöffnung und die wenigstens eine erste Austrittsöffnung sich in der ersten Richtung wenigstens bereichsweise nicht überlappen, oder/und dass die wenigstens eine zweite Eintrittsöffnung und die wenigstens eine zweite Austrittsöffnung sich in der ersten Richtung wenigstens bereichsweise nicht überlappen.

Für eine homogene Durchmischung von Abgas und Injektionsmittel in den beiden Mischkammer-Teilbereichen kann weiter vorgesehen sein, dass die wenigstens eine erste Eintrittsöffnung und die wenigstens eine zweite Eintrittsöffnung zueinander bezüglich der Öffnungsebene im Wesentlichen spiegelsymmetrisch angeordnet sind, oder/und dass die wenigstens eine erste Austrittsöffnung und die wenigstens eine zweite Austrittsöffnung zueinander bezüglich der Öffnungsebene im Wesentlichen spiegelsymmetrisch angeordnet sind.

Wenn die wenigstens eine erste Eintrittsöffnung und die wenigstens eine zweite Eintrittsöffnung zur Öffnungsebene einen Eintrittsöffnungsabstand aufweisen und die wenigstens eine erste Austrittsöffnung und die wenigstens eine zweite Austrittsöffnung zur Öffnungsebene einen von dem Eintrittsöffnungsabstand sich unterscheidenden Austrittsöffnungsabstand aufweisen, wird das Entstehen der Wirbelströmungen in den beiden Mischkammer-Teilbereichen weiter unterstützt.

Zum Erhalt einer die effiziente Durchmischung von Abgas und Injektionsmittel unterstützenden, definierten Strömungsführung entlang der Mischkammerbaugruppenwände kann weiter vorgesehen sein, dass:
- die stromaufwärtige Mischkammerbaugruppenwand in einem den ersten Mischkammer-Teilbereich in Richtung stromaufwärts begrenzenden Wandungsbereich, eine erste Teilbereich-Längsachse des ersten Mischkammer-Teilbereichs umgebend, in Richtung stromaufwärts ausgewölbt ist und in einem den zweiten Mischkammer-Teilbereich in Richtung stromaufwärts begrenzenden Wandungsbereich, eine zweite Teilbereich-Längsachse des zweiten Mischkammer-Teilbereichs umgebend, in Richtung stromaufwärts ausgewölbt ist,
   oder/und
- die stromabwärtige Mischkammerbaugruppenwand in einem den ersten Mischkammer-Teilbereich in Richtung stromabwärts begrenzenden Wandungsbereich, die erste Teilbereich-Längsachse des ersten Mischkammer-Teilbereichs umgebend, in Richtung stromabwärts ausgewölbt ist und in einem den zweiten Mischkammer-Teilbereich in Richtung stromabwärts begrenzenden Wandungsbereich, die zweite Teilbereich-Längsachse des zweiten Mischkammer-Teilbereichs umgebend, in Richtung stromabwärts ausgewölbt ist.

Beispielsweise kann die Ausgestaltung derart sein, dass:
- die stromaufwärtige Mischkammerbaugruppenwand und die stromabwärtige Mischkammerbaugruppenwand in ihrem jeweiligen den ersten Mischkammer-Teilbereich begrenzenden Wandungsbereich derart ausgewölbt sind, dass der erste Mischkammer-Teilbereich bezüglich der ersten Teilbereich-Längsachse ein im Wesentlichen rundes, vorzugsweise kreisrundes oder elliptisches oder ovales, Querschnittsprofil aufweist,
   oder/und
- die stromaufwärtige Mischkammerbaugruppenwand und die stromabwärtige Mischkammerbaugruppenwand in ihrem jeweiligen den zweiten Mischkammer-Teilbereich begrenzenden Wandungsbereich derart ausgewölbt sind, dass der zweite Mischkammer-Teilbereich bezüglich der zweiten Teilbereich-Längsachse ein im Wesentlichen rundes, vorzugsweise kreisrundes oder elliptisches oder ovales, Querschnittsprofil aufweist.

Um für die beiden Mischkammer-Teilbereiche jeweils ein möglichst großes Volumen bereitstellen zu können, wird vorgeschlagen, dass der erste Mischkammer-Teilbereich bezüglich der ersten Teilbereich-Längsachse im Wesentlichen zylindrisch ausgebildet ist und der zweite Mischkammer-Teilbereich bezüglich der zweiten Teilbereich-Längsachse im Wesentlichen zylindrisch ausgebildet ist, oder/und dass die erste Teilbereich-Längsachse und die zweite Teilbereich-Längsachse zueinander im Wesentlichen parallel angeordnet sind.

Zum Erhalt einer das Entstehen von Ablagerungen besonders effizient vermeidenden Ausgestaltung wird vorgeschlagen, dass der erste Mischkammer-Teilbereich entlang der ersten Teilbereich-Längsachse sich, vorzugsweise kegelartig, radial erweiternd ausgebildet ist und der zweite Mischkammer-Teilbereich entlang der zweiten Teilbereich-Längsachse sich, vorzugsweise kegelartig, radial erweiternd ausgebildet ist, oder/und dass die erste Teilbereich-Längsachse und die zweite Teilbereich-Längsachse zueinander angewinkelt angeordnet sind.

Insbesondere kann dabei vorgesehen sein, dass die wenigstens eine erste Eintrittsöffnung in einem Bereich geringerer Radialabmessung des ersten Mischkammer-Teilbereichs und die wenigstens eine erste Austrittsöffnung in einem Bereich größerer Radialabmessung des ersten Mischkammer-Teilbereichs angeordnet sind, oder/ und dass die wenigstens eine zweite Eintrittsöffnung in einem Bereich geringerer Radialabmessung des zweiten Mischkammer-Teilbereichs und die wenigstens eine zweite Austrittsöffnung in einem Bereich größerer Radialabmessung des zweiten Mischkammer-Teilbereichs angeordnet sind.

Die sich erweiternde Struktur der Mischkammer-Teilbereiche kann bei kompakter Bauart effizient in den Querschnitt der Abgasführungskomponente integriert werden, wenn die erste Teilbereich-Längsachse und die zweite Teilbereich-Längsachse derart zueinander angewinkelt sind, dass ein Abstand der ersten Teilbereich-Längsachse und der zweiten Teilbereich-Längsachse zueinander in einem Bereich geringerer Radialabmessung des ersten Mischkammer-Teilbereichs und des zweiten Mischkammer-Teilbereichs kleiner ist als ein Abstand der ersten Teilbereich-Längsachse und der zweiten Teilbereich-Längsachse zueinander in einem Bereich größerer Radialabmessung des ersten Mischkammer-Teilbereichs und des zweiten Mischkammer-Teilbereichs.

Die erste Teilbereich-Längsachse und die zweite Teilbereich-Längsachse können unabhängig davon, ob diese bezüglich einander parallel oder angewinkelt verlaufen, zueinander bezüglich der Öffnungsebene im Wesentlichen spiegelsymmetrisch angeordnet sein. Weiter kann vorgesehen sein, dass die erste Teilbereich-Längsachse und die zweite Teilbereich-Längsachse in einer zur Öffnungsebene im Wesentlichen orthogonalen Achsebene liegen.

Für eine gleichmäßige Durchmischung von Abgas und Injektionsmittel in den beiden Mischkammer-Teilbereichen können der erste Mischkammer-Teilbereich und der zweite Mischkammer-Teilbereich zueinander bezüglich der Öffnungsebene im Wesentlichen spiegelsymmetrisch ausgebildet sein.

Das Entstehen von schraubenwindungsartig entlang der Innenseiten der Mischkammerbaugruppenwände geführten Wirbelströmungen kann weiter dadurch unterstützt werden, dass:
- an einer Innenseite des den ersten Mischkammer-Teilbereich in Richtung stromaufwärts begrenzenden Wandungsbereichs der stromaufwärtigen Mischkammerbaugruppenwand wenigstens ein bereichsweise um die erste Teilbereich-Längsachse sich erstreckendes Strömungsleitelement vorgesehen ist,
   oder/und
- an einer Innenseite des den zweiten Mischkammer-Teilbereich in Richtung stromaufwärts begrenzenden Wandungsbereichs der stromaufwärtigen Mischkammerbaugruppenwand wenigstens ein bereichsweise um die zweite Teilbereich-Längsachse sich erstreckendes Strömungsleitelement vorgesehen ist,
   oder/und
- an einer Innenseite des den ersten Mischkammer-Teilbereich in Richtung stromabwärts begrenzenden Wandungsbereichs der stromabwärtigen Mischkammerbaugruppenwand wenigstens ein bereichsweise um die erste Teilbereich-Längsachse sich erstreckendes Strömungsleitelement vorgesehen ist,
   oder/und
- an einer Innenseite des den zweiten Mischkammer-Teilbereich in Richtung stromabwärts begrenzenden Wandungsbereichs der stromabwärtigen Mischkammerbaugruppenwand wenigstens ein bereichsweise um die zweite Teilbereich-Längsachse sich erstreckendes Strömungsleitelement vorgesehen ist.

Das gezielte Einleiten des auf die Mischkammerbaugruppe zu strömenden Abgases in die beiden Mischkammer-Teilbereiche kann dadurch unterstützt werden, dass:
- an dem den ersten Mischkammer-Teilbereich in Richtung stromaufwärts begrenzenden Wandungsbereich der stromaufwärtigen Mischkammerbaugruppenwand ein in Richtung auf eine Innenseite der Abgasführungskomponente sich zu erstreckendes und wenigstens eine erste Eintrittsöffnung begrenzendes Strömungsleitelement vorgesehen ist,
   oder/und
- an dem den zweiten Mischkammer-Teilbereich in Richtung stromaufwärts begrenzenden Wandungsbereich der stromaufwärtigen Mischkammerbaugruppenwand ein in Richtung auf die Innenseite der Abgasführungskomponente sich zu erstreckendes und wenigstens eine zweite Eintrittsöffnung begrenzendes Strömungsleitelement vorgesehen ist.

Die vorliegende Erfindung betrifft ferner eine Abgasanlage für eine Brennkraftmaschine, umfassend wenigstens eine Abgasbehandlungsanordnung und stromaufwärts wenigstens einer Abgasbehandlungsanordnung eine erfindungsgemäß aufgebaute Mischanordnung.

Die vorliegende Erfindung wird nachfolgend mit Bezug auf die beiliegenden Figuren detailliert beschrieben. Es zeigt:
- Fig. 1: eine Abgasanlage für eine Brennkraftmaschine in prinzipieller Darstellung;
- Fig. 2: eine Längsschnittansicht der Abgasanlage der Fig. 1 im Bereich einer Mischkammerbaugruppe derselben;
- Fig. 3: eine Ansicht der Mischkammerbaugruppe der Fig. 2 in Blickrichtung III in Fig. 2;
- Fig. 4: eine perspektivische Explosionsdarstellung einer Mischanordnung;
- Fig. 5: die zwei Mischkammerbaugruppenwände umfassende Mischkammerbaugruppe der Mischanordnung der Fig. 4 in perspektivischer Darstellung;
- Fig. 6: eine Ansicht der in Fig. 5 dargestellten Mischkammerbaugruppen in Blickrichtung VI in Fig. 5;
- Fig. 7: eine der Fig. 5 entsprechende Ansicht einer alternativen Ausgestaltungsart der Mischkammerbaugruppe;
- Fig. 8: eine Ansicht der Mischkammerbaugruppen der Fig. 7 in Blickrichtung VIII in Fig. 7;
- Fig. 9: eine perspektivische Explosionsansicht einer alternativen Ausgestaltungsart einer Mischanordnung;
- Fig. 10: eine perspektivische Ansicht der zwei Mischkammerbaugruppenwände umfassenden Mischkammerbaugruppe der Mischanordnung der Fig. 9;
- Fig. 11: eine Ansicht der Mischkammerbaugruppe der Fig. 10 in Blickrichtung XI in Fig. 10;
- Fig. 12: eine Ansicht der Mischkammerbaugruppe der Fig. 10 in Blickrichtung XII in Fig. 11;
- Fig. 13: eine perspektivische Explosionsansicht einer weiteren alternativen Ausgestaltungsart einer Mischanordnung;
- Fig. 14: eine perspektivische Ansicht der zwei Mischkammerbaugruppenwände umfassenden Mischkammerbaugruppe der Mischanordnung der Fig. 13;
- Fig. 15: eine Ansicht der Mischkammerbaugruppe der Fig. 14 in Blickrichtung XV in Fig. 14;
- Fig. 16: eine Ansicht der Mischkammerbaugruppe der Fig. 14 in Blickrichtung XVI in Fig. 15.

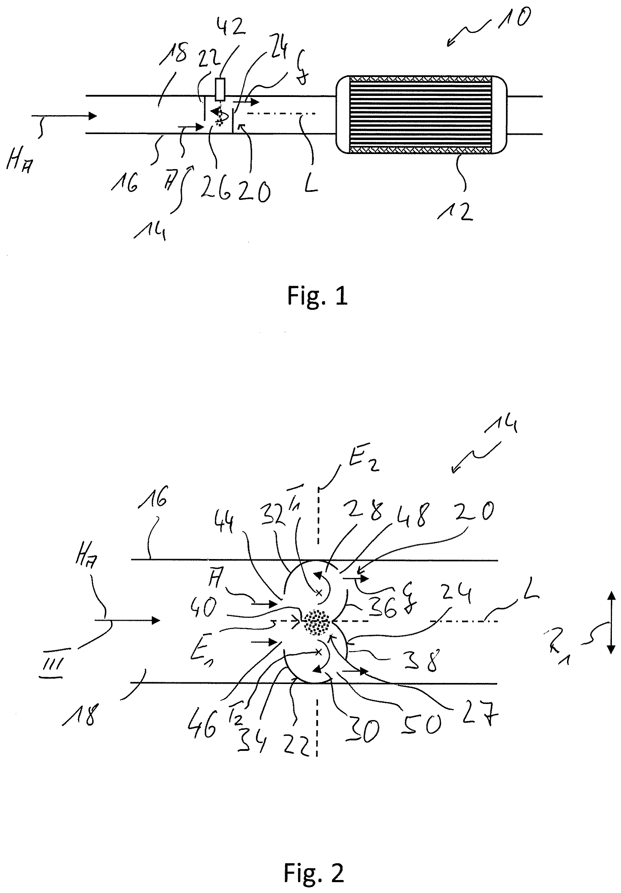

In Fig. 1 ist ein Abschnitt einer allgemein mit 10 bezeichneten Abgasanlage einer Brennkraftmaschine beispielsweise in einem Fahrzeug dargestellt. Die Abgasanlage 10 umfasst eine beispielsweise eine Katalysatoranordnung, wie z. B. SCR-Katalysator, umfassende Abgasbehandlungsanordnung 12, welcher das von einer Brennkraftmaschine ausgestoßene Abgas zugeführt wird. Stromaufwärts der Abgasbehandlungsanordnung 12 ist eine allgemein mit 14 bezeichnete Mischanordnung vorgesehen, welche eine beispielsweise rohrartige Abgasführungskomponente 16 umfasst. Von der Brennkraftmaschine ausgestoßenes Abgas A strömt in einer Abgas-Hauptströmungsrichtung H_{A} durch ein in der Abgasführungskomponente 16 gebildetes Abgas-Strömungsvolumen 18 hindurch auf die Mischanordnung 14 bzw. eine Mischkammerbaugruppe 20 derselben zu.

Die Mischkammerbaugruppe 20 umfasst, wie insbesondere in Fig. 2 zu erkennen, eine stromaufwärtige Mischkammerbaugruppenwand 22 und eine in Richtung einer Längsachse L der Abgasführungskomponente 16 bzw. in der Abgas-Hauptströmungsrichtung H_{A} auf die stromaufwärtige Mischkammerbaugruppenwand 22 folgende stromabwärtige Mischkammerbaugruppenwand 24. Die beiden Mischkammerbaugruppenwände 22, 24 begrenzen im Wesentlichen eine Mischkammer 26 der Mischkammerbaugruppe 20 in Richtung stromaufwärts und in Richtung stromabwärts. Eine Außenumfangskontur der Mischkammerbaugruppe 20 bzw. der Mischkammerbaugruppenwände 22, 24 ist bei Betrachtung in der Abgas-Hauptströmungsrichtung H_{A} an eine Innenumfangskontur der Abgasführungskomponente 16 angepasst. Weist die Abgasführungskomponente eine im Wesentlichen kreisrunde Innenumfangskontur auf, dann weisen die beiden Mischkammerbaugruppenwände 22, 24 eine entsprechende im Wesentlichen kreisrunde Außenumfangskontur auf, so dass die Mischkammerbaugruppe 20 im Wesentlichen passgenau in die Abgasführungskomponente 16 eingesetzt werden kann und im Wesentlichen kein in der Abgas-Hauptströmungsrichtung H_{A} auf die Mischkammerbaugruppe 20 zu strömendes Abgas A, ohne die Mischkammer 26 zu durchströmen, an der Mischkammerbaugruppe 20 vorbei in Richtung zu der Abgasbehandlungsanordnung 12 strömen kann.

Die beiden Mischkammerbaugruppenwände 22, 24 sind so geformt, dass zwei Mischkammer-Teilbereiche 28, 30 der Mischkammer 26 gebildet werden, die in einem Mischkammerangrenzungsbereich 27 zueinander offen sind. In Zuordnung zu dem ersten Mischkammer-Teilbereich 28 weist die stromaufwärtige Mischkammerbaugruppenwand 22 einen beispielsweise kreisförmig in Richtung stromaufwärts ausgewölbten Wandungsbereich 32 auf. Der Wandungsbereich 32 ist die eine erste Teilbereich-Längsachse T₁ des ersten Mischkammer-Teilbereichs 28 umgebend ausgewölbt. Entsprechend weist in Zuordnung zu dem zweiten Mischkammer-Teilbereich 30 die stromaufwärtige Mischkammerbaugruppenwand 22 einen Wandungsbereich 34 auf, welcher, eine zweite Teilbereich-Längsachse T₂ des zweiten Mischkammer-Teilbereichs 30 beispielsweise kreisartig umgebend, in Richtung stromaufwärts ausgewölbt ist.

Die stromabwärtige Mischkammerbaugruppenwand 24 weist in Zuordnung zu dem ersten Mischkammer-Teilbereich 28 einen die erste Teilbereich-Längsachse T₁ beispielsweise kreisförmig umgebende Wandungsbereich 36 auf, und weist in Zuordnung zu dem zweiten Mischkammer-Teilbereich 28 einen die zweite Teilbereich-Längsachse T₂ beispielsweise kreisartig umgebenden und in Richtung stromabwärts ausgewölbten Wandungsbereich 38 auf.

Die Wandungsbereiche 32, 36 definieren eine in Richtung der ersten Teilbereich-Längsachse T₁ sich erstreckende, im Wesentlichen zylindrischen Struktur des ersten Mischkammer-Teilbereichs 28. Gleichermaßen definieren die Wandungsbereiche 34, 38 eine in Richtung der zweiten Teilbereich-Längsachse T₂ sich erstreckende, im Wesentlichen zylindrische Struktur des zweiten Mischkammer-Teilbereichs 30.

Zwischen einem Angrenzungsbereich der Wandungsbereiche 32, 34 aneinander und einem Angrenzungsbereich der Wandungsbereiche 36, 38 aneinander ist eine Mischkammer-Angrenzungsöffnung 40 des Mischkammer-Angrenzungsbereichs 27 gebildet. Die Mischkammer-Angrenzungsöffnung 40 ist einerseits in Richtung der Abgas-Hauptströmungsrichtung H_{A} bzw. der Längsachse L der Abgasführungskomponente 16 und andererseits orthogonal dazu in einer zweiten Richtung R₂ ausgedehnt. Auch die beiden Teilbereich-Längsachsen T₁ und T₂ erstrecken sich im Wesentlichen in der zweiten Richtung R₂ zueinander im Wesentlichen parallel und liegen somit in einer zur Längsachse L im Wesentlichen orthogonalen Achsebene E₂. Die Achsebene E₂ wiederum steht senkrecht auf einer im Wesentlichen der Raumlage der Mischkammer-Angrenzungsöffnung 40 entsprechenden bzw. diese definierenden Öffnungsebene E₁. Die Raumlage der Ebene E₁ ist im Wesentlichen durch die Abgas-Hauptströmungsrichtung H_{A} bzw. die Längsachse L einerseits und die zweite Richtung R₂ andererseits definiert. Die beiden Teilbereich-Längsachsen T₁ und T₂ liegen zur Öffnungsebene E₁ in einer ersten Richtung R₁ beabstandet. Die erste Richtung R₁ ist zur zweiten Richtung R₂ und auch zur Längsachse L bzw. zur Abgas-Hauptströmungsrichtung H_{A} und damit insbesondere auch zur Öffnungsebene E₁ orthogonal.

Im Bereich der Mischkammer 26 mit dem Abgas A zu durchmischendes Reaktionsmittel R wird durch eine an der Abgasführungskomponente 16 getragene, allgemein auch als Injektor bezeichnete Injektionsmittel-Abgabeeinheit 42 in die Mischkammer 26 in einer Reaktionsmittel-Hauptabgaberichtung H_{R} entlang einer Injektionsmittel-Abgabelinie B im Bereich der Mischkammer-Angrenzungsöffnung 40 eingespritzt. Dabei liegt die Induktionsmittel-Abgabelinie B des im Wesentlichen in Form eines Sprühkegels eingespritzten Injektionsmittels R in der Öffnungsebene E₁ und steht im Wesentlichen senkrecht zur Längsachse L und zur ersten Richtung R₁. Somit sind die Injektionsmittel-Hauptabgaberichtung H_{R} und die Injektionsmittel-Abgabelinie B zur zweiten Richtung R₂ und auch den Teilbereich-Längsachsen T₁, T₂ im Wesentlichen parallel, und die Injektionsmittel-Abgabelinie B, welche im Wesentlichen eine Mittenlängsachse des Sprühkegels des Injektionsmittels R definieren kann, liegt mit den beiden Teilbereich-Längsachsen T₁, T₂ in der Achsebene E₂. Allgemein definiert somit die Injektionsmittel-Abgabelinie B im Wesentlichen eine Längs-Mittenlinie eines die Form des abgegebenen Injektionsmittels R, also beispielsweise eines Sprühkegels, definierenden geometrischen Gebildes.

Durch die Einspritzung des Reaktionsmittels R in die Mischkammer 26 im Bereich der Mischkammer-Angrenzungsöffnung 40 gelangt das Injektionsmittel R im Wesentlichen zu gleichen Anteilen in den ersten Mischkammer-Teilbereich 28 und in den zweiten Mischkammer-Teilbereich 30. Um diese Anteile des Injektionsmittels R mit dem Abgas A durchmischen zu können, weist die stromaufwärtige Mischkammerbaugruppenwand 22 im Wandungsbereich 32 in Zuordnung zu dem ersten Mischkammer-Teilbereich 28 eine erste Eintrittsöffnung 44 auf. Gleichermaßen weist die stromaufwärtige Mischkammerbaugruppenwand 22 in Zuordnung zum zweiten Mischkammer-Teilbereich 30 im Wandungsbereich 34 eine zweite Eintrittsöffnung 46 auf. Die Eintrittsöffnungen 44, 46 sind an der stromaufwärtigen Mischkammerbaugruppenwand 22 an einem der Positionierung der Injektionsmittel-Abgabeeinheit 42 entfernten bzw. diametral gegenüberliegenden Umfangsbereich angeordnet und sind insbesondere bezüglich der Öffnungsebene E im Wesentlichen spiegelsymmetrisch ausgebildet.

Die beiden Eintrittsöffnungen 44, 46 sind mit einem vergleichsweise geringen Eintrittsöffnungsabstand zur Öffnungsebene E₁ angeordnet, so dass das im Wesentlichen in der Abgas-Hauptströmungsrichtung H_{A} auf die Mischkammerbaugruppe 20 zu strömende Abgas A in einem vergleichsweise nahe an der Öffnungsebene E₁ liegenden Bereich in die Mischkammer-Teilbereiche 28, 30 an einem in Richtung der Teilbereich-Längsachsen T₁, T₂ von der Injektionsmittel-Abgabeeinheit 42 axial in Abstand liegenden Endbereich derselben eintritt. Da auch das Injektionsmittel R in diesen zentralen Bereich der Mischkammer 26 eingespritzt wird, kommt bereits beim Einströmen in die Mischkammer-Teilbereiche 28, 30 das Abgas A in Kontakt mit dem Injektionsmittel R und beginnt, sich mit diesem zu vermischen.

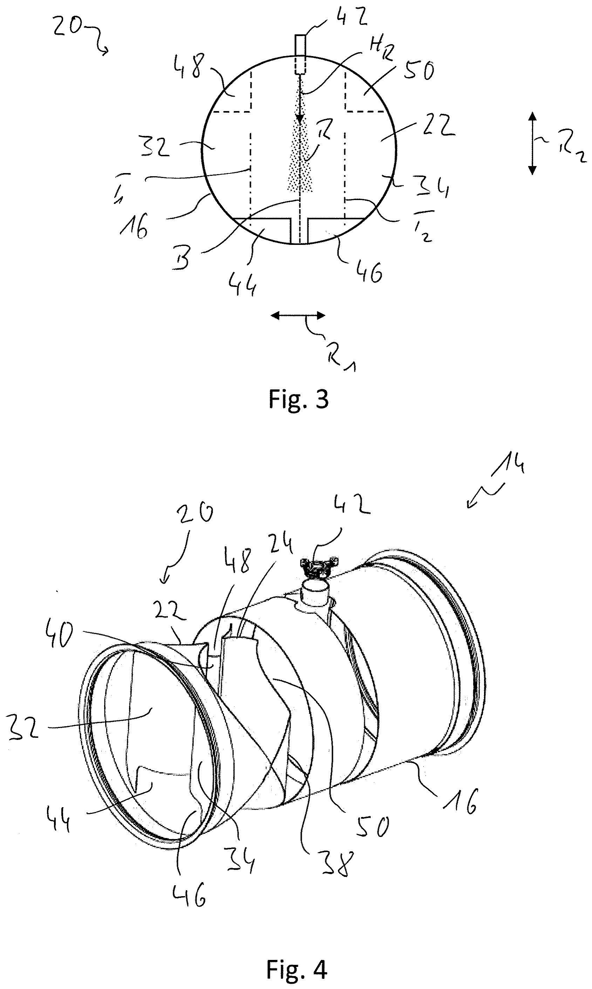

In der stromabwärtigen Mischkammerbaugruppenwand 24 ist im Wandungsbereich 36 in Zuordnung zum ersten Mischkammer-Teilbereich 28 eine erste Austrittsöffnung 48 ausgebildet. Gleichermaßen ist im Wandungsbereich 38 der stromabwärtigen Mischkammerbaugruppenwand 24 in Zuordnung zum zweiten Mischkammer-Teilbereich 30 eine zweite Austrittsöffnung 50 ausgebildet. Wie in Fig. 3 angedeutet, liegen die erste Austrittsöffnung 48 und die zweite Austrittsöffnung 50 in einem der Injektionsmittel-Abgabeeinheit 42 nahe liegenden Umfangsbereich der stromabwärtigen Mischkammerbaugruppenwand 24 und weisen zur Öffnungsebene E₁ einen Austrittsöffnungsabstand auf, der größer ist, als der Eintrittsöffnungsabstand. Es ist darauf hinzuweisen, dass der Eintrittsöffnungsabstand und der Austrittsöffnungsabstand beispielsweise jeweils durch den kleinsten Abstand der Eintrittsöffnungen 44, 46 bzw. der Austrittsöffnungen 48, 50 zur Öffnungsebene E₁ definiert sein kann. Sind in Zuordnung zum ersten Mischkammer-Teilbereich 28 bzw. zum zweiten Mischkammer-Teilbereich 30 jeweils mehrere erste bzw. zweite Eintrittsöffnungen 44, 46 bzw. Austrittsöffnungen 48, 50 vorgesehen, so kann jeweils der minimale Abstand der der Öffnungsebene E₁ am nächstliegenden positionierten Eintrittsöffnung bzw. Austrittsöffnung als Eintrittsöffnungsabstand bzw. Austrittsöffnungsabstand betrachtet werden.

Da das durch die Eintrittsöffnungen 44, 46 in die beiden Mischkammer-Teilbereiche 28, 30 einströmende Abgas A die Mischkammer-Teilbereiche 28, 30 jeweils nur durch deren Austrittsöffnungen 48, 50 verlassen kann, wird das die Mischkammer-Teilbereiche 28, 30 durchströmende Abgas A in eine die jeweilige Teilbereich-Längsachse T₁ bzw. T₂ schraubenwindungsartig umgebende Wirbelströmung gezwungen. Bei dieser Wirbelströmung nimmt das Abgas A das im Bereich der Mischkammer-Angrenzungsöffnung 40 eingespritzte Injektionsmittel R jeweils zur Strömung in Umfangsrichtung um die zugeordnete Teilbereich-Längsachse T₁, T₂ mit, so dass, bedingt durch die auftretenden Fliehkräfte, das in Tröpfchenform eingespritzte Injektionsmittel R im Wesentlichen nach radial außen bezüglich der jeweiligen Teilbereich-Längsachse T₁, T₂ gedrängt wird. Dadurch wird ein Kontakt des Injektionsmittels R mit den Innenoberflächen der Mischkammerbaugruppenwände 22, 24 und damit die Wärmeaufnahme von diesem unterstützt.

Da das Abgas A und mit diesem das Injektionsmittel R die Mischkammer-Teilbereiche 28, 30 nicht geradlinig, sondern in der schraubenwindungsartig gewundenen Wirbelströmung durchströmt, ist eine vergleichsweise lange Verweildauer des sich bildenden Gemisches G aus Abgas A und Injektionsmittel R gewährleistet, wobei durch den im Verlauf dieser Strömung hergestellten bzw. auftretenden Kontakt mit den Innenoberflächen der Mischkammerbaugruppenwände 22, 24 verstärkt Wärme auf das Injektionsmittel R übertragen wird und somit auch dessen Verdampfung bzw. Überführung in einen gasförmigen Aggregatzustand gefördert wird.

Das im Wesentlichen homogene Gemisch G aus Abgas A und gasförmigem Injektionsmittel R verlässt die Mischkammer 26 bzw. die Mischkammerbaugruppe 20 durch die beiden Austrittsöffnungen 48, 50 und kann dann beispielsweise zur Durchführung einer katalytischen Reaktion bzw. einer Oxidationsreaktion in Richtung auf die Abgasbehandlungsanordnung 12 zu strömen.

Da die beiden Mischkammer-Teilbereiche 28, 30 mit ihrer in Richtung der jeweiligen Teilbereich-Längsachse T₁, T₂ langgestreckten, im Wesentlichen zylindrischen Querschnittsgeometrie zueinander bezüglich der Öffnungsebene E₁ im Wesentlichen spiegelsymmetrisch ausgebildet sind, wird auch unterstützt durch die gleichmäßige Aufteilung des im Bereich der Mischkammer-Angrenzungsöffnung 40 eingespritzten Injektionsmittels R eine gleichmäßige und effiziente Durchmischung von Injektionsmittel R und Abgas A und in den einzelnen Mischkammer-Teilbereichen 28, 30 eine entsprechend gleichmäßige und im Wesentlichen vollständige Überführung des in flüssiger Form bzw. in Tröpfchenform eingespritzten Injektionsmittels in einen gasförmigen Aggregatzustand erreicht.

Die Entstehung der beiden zueinander gegenläufig orientierten Strömungswirbel in den beiden Mischkammer-Teilbereichen 28, 30 wird durch die zueinander versetzte Positionierung der jeweiligen Eintrittsöffnung 44, 46 und Austrittsöffnung 48, 50 in der ersten Richtung R₁ einerseits und die versetzte Positionierung der Eintrittsöffnungen 44, 46 bezüglich der zugeordneten Austrittsöffnungen 48, 50 in der zweiten Richtung R₂ unterstützt. Da insbesondere ein vergleichsweise großer Abstand zwischen den einander zugeordneten Eintrittsöffnungen 44, 46 und Austrittsöffnungen 48, 50 in Richtung der jeweiligen Teilbereich-Längsachse T₁ bzw. T₂ vorhanden ist, ist ein direkter Strömungskurzschluss durch die einander paarweise zugeordneten Öffnungen hindurch nicht möglich. Gleichzeitig verhindert die schraubenwindungsartig durch die Mischkammer-Teilbereiche 28, 30 hindurch geführte Abgasströmung, dass bei Positionierung der Eintrittsöffnungen 44, 46 in einem in vertikaler Richtung unteren Bereich an den Innenseiten der Mischkammerbaugruppenwände 22, 24 sich ansammelndes, flüssiges Injektionsmittel R nach unten strömt und sich in einem unteren Bereich dort, wo die Mischkammerbaugruppenwände 22, 24 an die Innenoberfläche der Abgasführungskomponente 16 angrenzen, sammelt und Ablagerungen bildet. Die der schraubenartigen Strömungsführung entlang der jeweiligen Teilbereich-Längsachse T₁, T₂ entgegenwirkende Schwerkraft führt zu einer Verlängerung der Verweildauer des Injektionsmittels R im Bereich der Mischkammer 26, so dass mehr Zeit zur Verfügung steht, um dieses in den gasförmigen Aggregatzustand zu überführen. Es kann somit auch weitestgehend vermieden werden, dass nicht verdampftes bzw. verdunstetes, in Tröpfchenform vorliegendes Injektionsmittel R mit dem Abgas A aus der Mischkammer 26 ausgetragen wird.

Bevor nachfolgend verschiedene bauliche Ausgestaltungen einer derartigen Mischanordnung 14 detailliert beschrieben werden, ist darauf hinzuweisen, dass die Querschnittsgeometrie der Mischkammer-Teilbereiche auch anders gewählt werden könnte, als dies beispielsweise in Fig. 2 dargestellt ist. Beispielsweise könnten durch eine weniger stark ausgewölbte Formgebung der Wandungsbereiche 32, 34, 36, 38 die grundsätzlich mit im Wesentlichen zylindrischer Gestalt ausgebildeten Mischkammer-Teilbereiche 28, 30 eine im Wesentlichen elliptische oder ggf. auch ovale Querschnittsgeometrie bezüglich der Teilbereich-Längsachsen T₁ bzw. T₂ aufweisen.

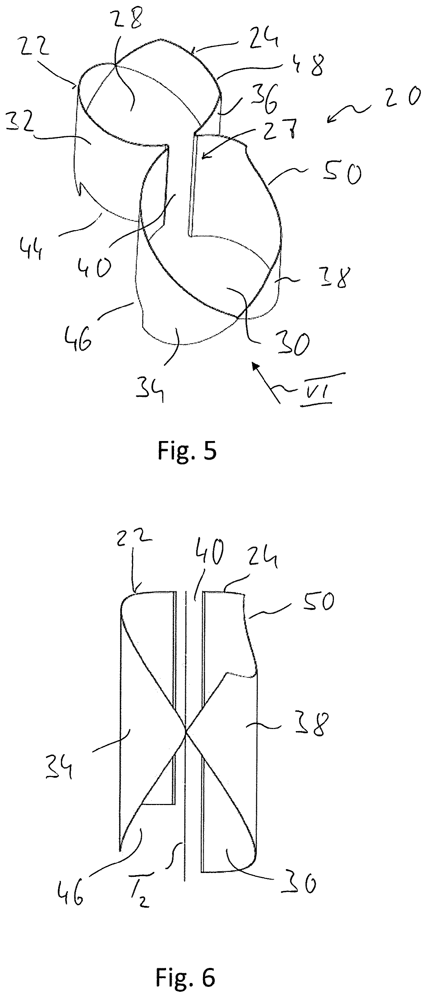

Die Fig. 4 bis 6 zeigen eine erste bauliche Ausgestaltung der Mischanordnung 14, welche im Wesentlichen der vorangehend mit Bezug auf die Fig. 1 bis 3 beschriebenen Ausgestaltung entspricht. Zu erkennen sind die beiden Mischkammerbaugruppenwände 22, 24 mit ihren in Richtung stromaufwärts bzw. in Richtung stromabwärts ausgewölbten Wandungsbereichen 32, 34 bzw. 36, 38. In diesem Ausgestaltungsbeispiel sind die beiden Eintrittsöffnungen 44, 46 so weit nach innen auf die Öffnungsebene E₁ bzw. die Mischkammer-Angrenzungsöffnung 40 zu verlagert, dass die Eintrittsöffnungen 44, 46 unmittelbar ineinander übergehen und somit deren Abstand zur Öffnungsebene E₁ gleich Null ist.

Die beiden Mischkammerbaugruppenwände 22, 24 sind beispielsweise als Blechumformteile ausgebildet und können an die Innenoberfläche der im dargestellten Ausgestaltungsbeispiel mehrteilig aufgebauten Abgasführungskomponente 16 durch Materialschluss, beispielsweise Verlöten oder Verschweißen, angebunden werden, so dass ein insbesondere auch ein Gasleckage vermeidender dichter Anschluss der Mischkammerbaugruppenwände 22, 24 an die Innenoberfläche der Abgasführungskomponente 16 gewährleistet ist.

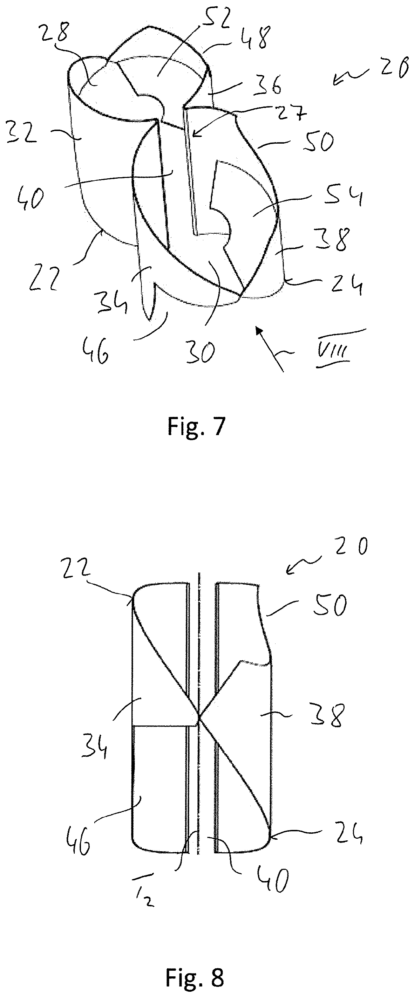

Eine Abwandlung dieser Ausgestaltungsart ist in den Fig. 7 und 8 dargestellt. Bei dieser Abwandlung sind die beiden Eintrittsöffnungen 44, 46 weiter nach außen, also in der ersten Richtung R₁ von der Öffnungsebene E₁ bzw. der Mischkammer-Angrenzungsöffnung 40 weg verlagert. Die Austrittsöffnungen 48, 50 können die auch in den Fig. 4 bis 6 erkennbare Positionierung aufweisen, oder können weiter nach innen, also auf die Öffnungsebene E₁ bzw. die Mischkammer-Angrenzungsöffnung 40 zu verlagert sein, so dass zwischen den Eintrittsöffnungen 44, 46 einerseits und den diesen jeweils zugeordneten Austrittsöffnungen 48, 50 andererseits nicht nur in Richtung der jeweiligen Teilbereich-Längsachse T₁ bzw. T₂ kein Überlapp ein axialer Abstand besteht, sondern auch ein stärkerer Versatz zueinander in der ersten Richtung R₁ vorhanden ist, um dadurch das Entstehen der Wirbelströmung zu unterstützen.

Zur weiteren Unterstützung der Wirbelströmung sind, wie in Fig. 7 erkennbar, beispielsweise an der Innenoberfläche der stromabwärtigen Mischkammerbaugruppenwand 24 plattenartige Strömungsleitelemente 52, 54 vorgesehen, welche, im Wesentlichen in der Strömungsrichtung der Wirbelströmung sich erstreckend, jeweils zugeordnete Teilbereich-Längsachse bereichsweise umgibt. Auch dadurch wird ein direkter Strömungskurzschluss von einer jeweiligen Eintrittsöffnung 44, 46 zur zugeordneten Austrittsöffnung 48, 50 effizient verhindert. Es ist zu betonen, dass alternativ oder zusätzlich derartige Strömungsführungselemente auch an der stromaufwärtigen Mischkammerbaugruppenwand 22 vorgesehen sein können.

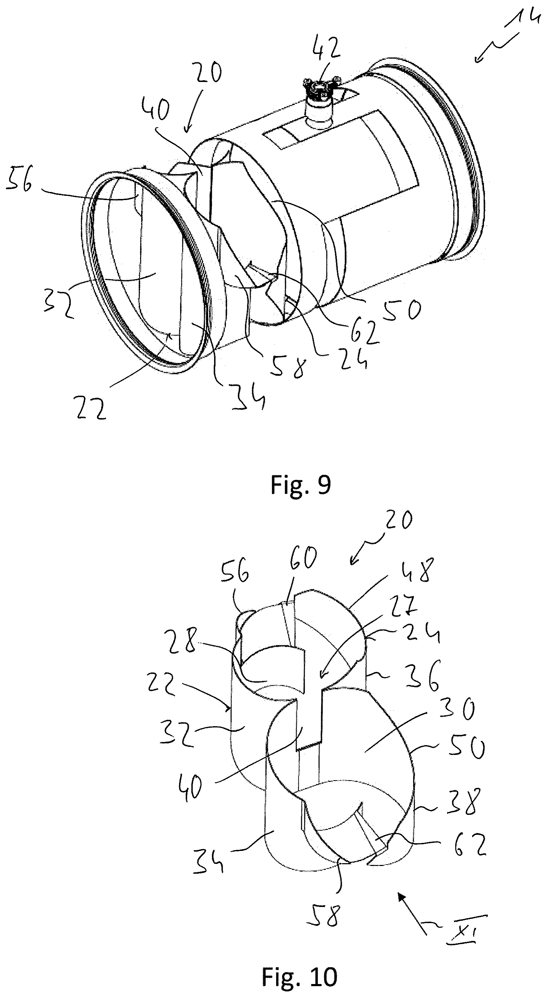

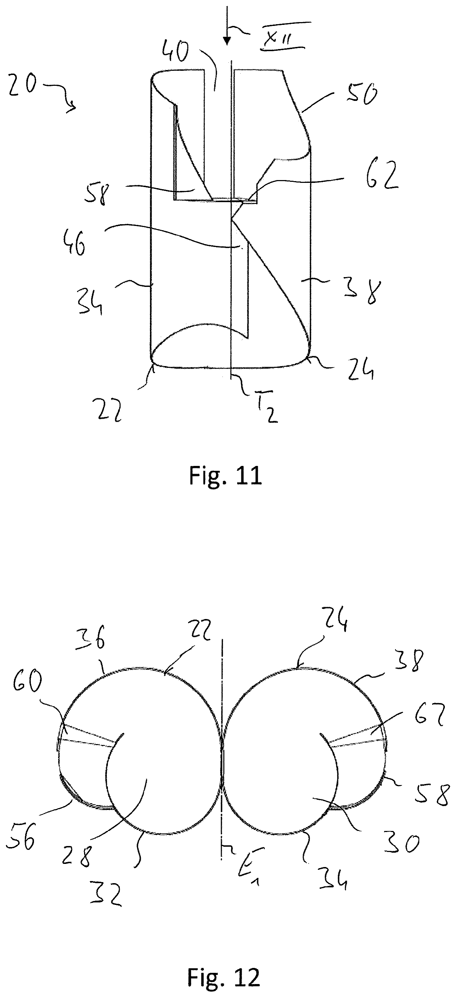

Die Fig. 9 bis 12 zeigen eine alternative Ausgestaltungsart der Mischanordnung 14, bei welcher, was insbesondere in den Fig. 10 und 12 zu erkennen ist, die in Richtung stromaufwärts gewölbten Wandungsbereiche 32, 34 der stromaufwärtigen Mischkammerbaugruppenwand 22 stärker gekrümmt sind, bei kreisförmiger Auswölbung also einen kleineren Krümmungsradius aufweisen. Dadurch entsteht in dem von der Öffnungsebene E₁ bzw. der Mischkammer-Angrenzungsöffnung 40 in Abstand liegenden Bereich ein Versatz der Wandungsbereiche 32 und 36 zueinander bzw. der Wandungsbereich 34 und 38 zueinander.

An der stromaufwärtigen Mischkammerbaugruppenwand 22 ist bei jedem Wandungsbereich 32, 34 ein von diesem nach außen in Richtung von der Öffnungsebene E₁ sich weg erstreckendes Strömungsleitelement 56, 58 vorgesehen, unter welchen die Eintrittsöffnungen 44, 46 gebildet sind. Für eine erhöhte Stabilität kann auch am jeweiligen Wandungsbereich 36, 38 der stromabwärtigen Mischkammerbaugruppenwand 24 ein nach einwärts, also in Richtung auf die Öffnungsebene E₁ bzw. die Mischkammer-Angrenzungsöffnung 40 zu sich erstreckender Strömungsleitabschnitt 60, 62 ausgebildet sein, welcher zusammen mit dem zugeordneten, an der stromaufwärtigen Mischkammerbaugruppenwand 22 ausgebildeten Strömungsleitelement die jeweilige Eintrittsöffnung 44, 46 begrenzt.

Wie in Fig. 10 deutlich zu erkennen, ist bei dieser Ausgestaltungsart die im Mischkammer-Angrenzungsbereich 27 ausgebildete Mischkammer-Angrenzungsöffnung 40 in der zweiten Richtung R₂ begrenzt ausgebildet, so dass in dem von der Injektionsmittel-Abgabeeinheit 42 entfernt liegenden Bereich der Mischkammer 26 die beiden Mischkammer-Teilbereiche 28, 30 voneinander getrennt sind. Hierzu kann beispielsweise zwischen die beiden Mischkammer-Teilbereichen 28, 30 ein Wandungselement eingesetzt werden. Alternativ könnte bei dieser Ausgestaltung auch vorgesehen sein, dass zwei in der Öffnungsebene E₁ getrennte Bauteile vorhanden sind, von welchen eines den Wandungsbereich 32 und den Wandungsbereich 36 und ein anderes den Wandungsbereich 34 und den Wandungsbereich 38 bereitstellt. Die die Wandungsbereiche 32, 34 umfassende stromaufwärtige Mischkammerbaugruppenwand 22 wäre dabei somit aus zwei Teilen aufgebaut, ebenso wie die die Wandungsbereiche 36, 38 umfassende stromabwärtige Mischkammerbaugruppenwand 24.

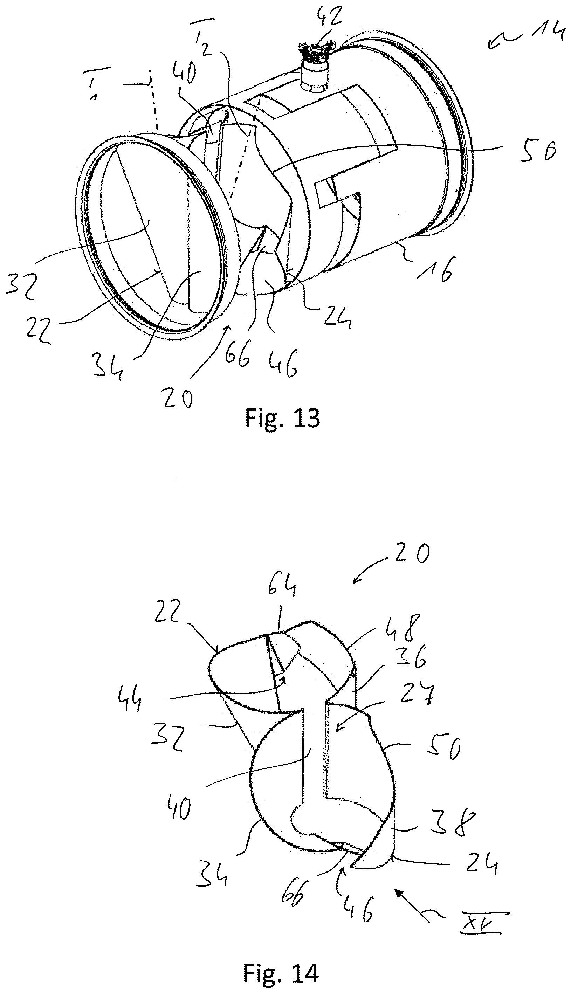

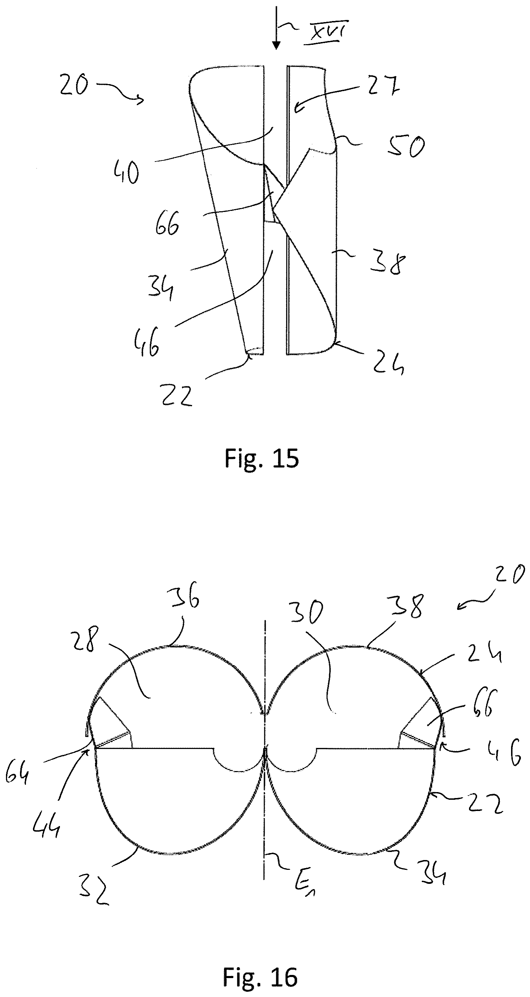

Eine weitere alternative Ausgestaltung der Mischanordnung 14 ist in den Fig. 13 bis 16 dargestellt. Bei dieser Ausgestaltung kann die stromabwärtige Mischkammerbaugruppenwand 24 beispielsweise wieder so ausgebildet sein, wie vorangehend mit Bezug auf die Fig. 4 bis 12 beschrieben. D.h., die Wandungsbereiche 36, 38 sind bezüglich der jeweils zugeordneten Teilbereich-Längsachse T₁, T₂ mit zylindrischer Geometrie ausgewölbt. Die stromaufwärtige Mischkammerbaugruppenwand 22 ist in ihren Wandungsbereichen 32, 34 derart in Richtung stromaufwärts ausgewölbt, dass sich eine in Richtung der jeweils zugeordneten und durch die Formgebung der stromaufwärtigen Mischkammerbaugruppenwand 22 definierten Teilbereich-Längsachsen T₁, T₂ kegelförmige Querschnittsgeometrie ergibt. Die so definierten Teilbereich-Längsachsen T₁, T₂ liegen also zueinander angewinkelt und beispielsweise in der Achsebene E₂, wobei im unteren Bereich, also in dem den Eintrittsöffnungen 44, 46 näher liegenden Bereichen, die Teilbereich-Längsachsen T₁, T₂ einen kleineren Abstand aufweisen und in Richtung auf die Austrittsöffnungen 48, 50 zu auseinanderlaufen.

An der stromaufwärtigen Mischkammerbaugruppenwand 22 ist bei jedem Wandungsbereich 32, 34 an dem von der Öffnungsebene E₁ entfernt liegenden Endbereich ein nach außen bzw. auf die stromabwärtige Mischkammerbaugruppenwand 24 zu sich erstreckendes Strömungsleitelement 64, 66 vorgesehen, unter welchem die jeweilige Eintrittsöffnung 44 bzw. 46 gebildet ist.

Die kegelförmige Auswölbung der Wandungsbereiche 32, 34 mit der in Richtung der jeweiligen Teilbereich-Längsachse T₁, T₂ sich radial erweiternden Querschnittsgeometrie hat zur Folge, dass im Bereich nahe den Eintrittsöffnungen 44, 46 aufgrund der kleineren Querschnittsgeometrie der Mischkammer-Teilbereiche 28, 30 eine höhere Strömungsgeschwindigkeit vorhanden ist, was aufgrund der Wirbelströmung auch zu höheren Zentrifugalkräften und somit einer effizienten Mitführung des nahe den Eintrittsöffnungen 44, 46 in die Mischkammer-Teilbereiche 28, 30 eintretenden Injektionsmittels beiträgt. Somit wird einem Ansammeln von flüssigem Injektionsmittel in einem in einer Vertikalrichtung unteren bzw. den Eintrittsöffnungen 44, 46 nahe liegenden Bereich der Mischkammer-Teilbereiche 28, 30 effizient entgegengewirkt.

Bei einer Abwandlung dieser Ausgestaltungsort könnte auch die stromabwärtige Mischkammerbaugruppenwand 24 in ihren Wandlungsbereichen 36, 38 bezüglich der jeweils zugeordneten Teilbereich-Längsachse T₁, T₂ mit kegelartiger Geometrie ausgewölbt sein, so dass die in axialer Richtung der Teilbereich-Längsachsen T₁, T₂ zunehmende Querschnittsgröße noch stärker ausgeprägt ist.

Grundsätzlich könnte bei einer erfindungsgemäß aufgebauten Mischanordnung auch vorgesehen sein, dass die beiden Mischkammer-Teilbereiche 28, 30 so bezüglich der Längsachse L bzw. der Abgas-Hauptströmungsrichtung H_{A} positioniert sind, dass deren Teilbereich-Längsachsen T₁, T₂ bezüglich der Achsenebene E₂ angewinkelt sind und beispielsweise in Richtung von den Eintrittsöffnungen 44, 46 zu den Austrittsöffnungen 48, 50 nach stromabwärts oder stromaufwärts geneigt sind.

## Patentansprüche

1. Mischanordnung zum Mischen von in Abgas (A) einer Brennkraftmaschine eingespritztem Injektionsmittel (R) mit dem Abgas (A), umfassend:
- eine in Richtung einer Längsachse (L) sich erstreckende, von Abgas (A) in einer Abgas-Hauptströmungsrichtung (H_{A}) durchströmbare Abgasführungskomponente (16), wobei in der Abgasführungskomponente (16) ein von dem Abgas im Wesentlichen in der Abgas-Hauptströmungsrichtung (H_{A}) durchströmbares Abgas-Strömungsvolumen (18) gebildet ist,
- eine Mischkammerbaugruppe (20) mit einer eine Mischkammer (26) in dem Abgas-Strömungsvolumen (18) in Richtung stromaufwärts begrenzenden stromaufwärtigen Mischkammerbaugruppenwand (22) und einer die Mischkammer (26) in dem Abgasströmungsvolumen (18) in Richtung stromabwärts begrenzenden stromabwärtigen Mischkammerbaugruppenwand (24),
- eine Injektionsmittel-Abgabeeinheit (42) zur Abgabe von flüssigem Injektionsmittel (R) in die Mischkammer (26) im Wesentlichen in einer Injektionsmittel-Hauptabgaberichtung (H_{R}) entlang einer Injektionsmittel-Abgabelinie (B),
wobei die Mischkammer (26) einen durch die stromaufwärtige Mischkammerbaugruppenwand (22) und die stromabwärtige Mischkammerbaugruppenwand (24) begrenzten ersten Mischkammer-Teilbereich (28) und einen durch die stromaufwärtige Mischkammerbaugruppenwand (22) und die stromabwärtige Mischkammerbaugruppenwand (24) begrenzten zweiten Mischkammer-Teilbereich (30) aufweist, wobei der erste Mischkammer-Teilbereich (28) und der zweite Mischkammer-Teilbereich (30) in einer ersten Richtung (R₁) im Wesentlichen quer zur Abgas-Hauptströmungsrichtung (H_{A}) nebeneinander positioniert sind und in einem Mischkammer-Angrenzungsbereich (27) zueinander offen sind, wobei der Mischkammer-Angrenzungsbereich (27) in einer zur ersten Richtung (R₁) im Wesentlichen orthogonalen zweiten Richtung (R₂) im Wesentlichen quer zur Abgas-Hauptströmungsrichtung (HA) langgestreckt ist, wobei die Injektionsmittel-Abgabeeinheit (42) zur Abgabe des Injektionsmittels (R) in den Mischkammer-Angrenzungsbereich (27) angeordnet ist, wobei in Zuordnung zu dem ersten Mischkammer-Teilbereich (28) in der stromaufwärtigen Mischkammerbaugruppenwand (22) wenigstens eine erste Eintrittsöffnung (44) und in der stromabwärtigen Mischkammerbaugruppenwand (24) wenigstens eine erste Austrittsöffnung (48) vorgesehen sind und in Zuordnung zu dem zweiten Mischkammer-Teilbereich (30) in der stromaufwärtigen Mischkammerbaugruppenwand (22) wenigstens eine zweite Eintrittsöffnung (46) und in der stromabwärtigen Mischkammerbaugruppenwand (24) wenigstens eine zweite Austrittsöffnung (50) vorgesehen sind, wobei bei dem ersten Mischkammer-Teilbereich (28) die wenigstens eine erste Eintrittsöffnung (44) und die wenigstens eine erste Austrittsöffnung (48) in der ersten Richtung (R₁) oder/und in der zweiten Richtung (R₂) zueinander versetzt angeordnet sind und bei dem zweiten Mischkammer-Teilbereich (30) die wenigstens eine zweite Eintrittsöffnung (46) und die wenigstens eine zweite Austrittsöffnung (50) in der ersten Richtung (R₁) oder/und in der zweiten Richtung (R₂) zueinander versetzt angeordnet sind.

2. Mischanordnung nach Anspruch 1,
**dadurch gekennzeichnet, dass** die erste Richtung (R₁) und die zweite Richtung (R₂) zur Abgas-Hauptströmungsrichtung (H_{A}) oder/und zur Längsachse (L) im Wesentlichen orthogonal sind, oder/und dass die Injektionsmittel-Hauptabgaberichtung (H_{R}) zur Abgas-Hauptströmungsrichtung (H_{A}) oder/und zur Längsachse (L) im Wesentlichen orthogonal ist oder/und im Wesentlichen der zweiten Richtung (R₂) entspricht.

3. Mischanordnung nach Anspruch 1 oder 2,
**dadurch gekennzeichnet, dass** der Mischkammer-Angrenzungsbereich (27) im Wesentlichen durch eine Mischkammer-Angrenzungsöffnung (40) gebildet ist, wobei die Mischkammer-Angrenzungsöffnung (40) im Wesentlichen in einer durch die Abgas-Hauptströmungsrichtung (H) und die zweite Richtung (R₂) aufgespannten und zur ersten Richtung (R₁) orthogonalen Öffnungsebene (E₁) liegt.

4. Mischanordnung nach Anspruch 3,
**dadurch gekennzeichnet, dass** die Injektionsmittel-Abgabelinie (B) im Wesentlichen in der Öffnungsebene (E₁) liegt oder/und zur Abgas-Hauptströmungsrichtung (H_{A}) im Wesentlichen orthogonal ist.

5. Mischanordnung nach einem der Ansprüche 1-4,
**dadurch gekennzeichnet, dass** die wenigstens eine erste Eintrittsöffnung (44) und die wenigstens eine erste Austrittsöffnung (48) sich in der zweiten Richtung (R₂) im Wesentlichen nicht überlappen, oder/und dass die wenigstens eine zweite Eintrittsöffnung (46) und die wenigstens eine zweite Austrittsöffnung (50) sich in der zweiten Richtung (R₂) im Wesentlichen nicht überlappen.

6. Mischanordnung nach einem der Ansprüche 1-5,
**dadurch gekennzeichnet, dass** die wenigstens eine erste Eintrittsöffnung (44) und die wenigstens eine erste Austrittsöffnung (48) sich in der ersten Richtung (R1) wenigstens bereichsweise nicht überlappen, oder/und dass die wenigstens eine zweite Eintrittsöffnung (46) und die wenigstens eine zweite Austrittsöffnung (50) sich in der ersten Richtung (R₁) wenigstens bereichsweise nicht überlappen.

7. Mischanordnung nach einem der Ansprüche 1-6, sofern auf Anspruch 3 rückbezogen,
**dadurch gekennzeichnet, dass** die wenigstens eine erste Eintrittsöffnung (44) und die wenigstens eine zweite Eintrittsöffnung (46) zueinander bezüglich der Öffnungsebene (E₁) im Wesentlichen spiegelsymmetrisch angeordnet sind, oder/und dass die wenigstens eine erste Austrittsöffnung (48) und die wenigstens eine zweite Austrittsöffnung (50) zueinander bezüglich der Öffnungsebene (E₁) im Wesentlichen spiegelsymmetrisch angeordnet sind.

8. Mischanordnung nach einem der Ansprüche 1-7, sofern auf Anspruch 3 rückbezogen,
**dadurch gekennzeichnet, dass** die wenigstens eine erste Eintrittsöffnung (44) und die wenigstens eine zweite Eintrittsöffnung (46) zur Öffnungsebene (E₁) einen Eintrittsöffnungsabstand aufweisen, und dass die wenigstens eine erste Austrittsöffnung (48) und die wenigstens eine zweite Austrittsöffnung (50) zur Öffnungsebene (E₁) einen von dem Eintrittsöffnungsabstand sich unterscheidenden Austrittsöffnungsabstand aufweisen.

9. Mischanordnung nach einem der Ansprüche 1-8,
**dadurch gekennzeichnet, dass**:
- die stromaufwärtige Mischkammerbaugruppenwand (22) in einem den ersten Mischkammer-Teilbereich (28) in Richtung stromaufwärts begrenzenden Wandungsbereich (32), eine erste Teilbereich-Längsachse (T₁) des ersten Mischkammer-Teilbereichs (28) umgebend, in Richtung stromaufwärts ausgewölbt ist und in einem den zweiten Mischkammer-Teilbereich (30) in Richtung stromaufwärts begrenzenden Wandungsbereich (34), eine zweite Teilbereich-Längsachse (T₂) des zweiten Mischkammer-Teilbereichs (30) umgebend, in Richtung stromaufwärts ausgewölbt ist,
oder/und
- die stromabwärtige Mischkammerbaugruppenwand (24) in einem den ersten Mischkammer-Teilbereich (28) in Richtung stromabwärts begrenzenden Wandungsbereich (36), die erste Teilbereich-Längsachse (T₁) des ersten Mischkammer-Teilbereichs (28) umgebend, in Richtung stromabwärts ausgewölbt ist und in einem den zweiten Mischkammer-Teilbereich (30) in Richtung stromabwärts begrenzenden Wandungsbereich (38), die zweite Teilbereich-Längsachse (T₂) des zweiten Mischkammer-Teilbereichs (30) umgebend, in Richtung stromabwärts ausgewölbt ist.

10. Mischanordnung nach Anspruch 9,
**dadurch gekennzeichnet, dass**:
- die stromaufwärtige Mischkammerbaugruppenwand (22) und die stromabwärtige Mischkammerbaugruppenwand (24) in ihrem jeweiligen den ersten Mischkammer-Teilbereich (28) begrenzenden Wandungsbereich (32, 36) derart ausgewölbt sind, dass der erste Mischkammer-Teilbereich (28) bezüglich der ersten Teilbereich-Längsachse (T₁) ein im Wesentlichen rundes, vorzugsweise kreisrundes oder elliptisches oder ovales, Querschnittsprofil aufweist,
oder/und
- die stromaufwärtige Mischkammerbaugruppenwand (22) und die stromabwärtige Mischkammerbaugruppenwand (24) in ihrem jeweiligen den zweiten Mischkammer-Teilbereich (30) begrenzenden Wandungsbereich (34, 38) derart ausgewölbt sind, dass der zweite Mischkammer-Teilbereich (30) bezüglich der zweiten Teilbereich-Längsachse (T2) ein im Wesentlichen rundes, vorzugsweise kreisrundes oder elliptisches oder ovales, Querschnittsprofil aufweist.

11. Mischanordnung nach Anspruch 9 oder 10,
**dadurch gekennzeichnet, dass** der erste Mischkammer-Teilbereich (28) bezüglich der ersten Teilbereich-Längsachse (T₁) im Wesentlichen zylindrisch ausgebildet ist und der zweite Mischkammer-Teilbereich (30) bezüglich der zweiten Teilbereich-Längsachse (T₁) im Wesentlichen zylindrisch ausgebildet ist, oder/und dass die erste Teilbereich-Längsachse (T₁) und die zweite Teilbereich-Längsachse (T₂) zueinander im Wesentlichen parallel angeordnet sind.

12. Mischanordnung nach Anspruch 9 oder 10,
**dadurch gekennzeichnet, dass** der erste Mischkammer-Teilbereich (28) entlang der ersten Teilbereich-Längsachse (T1) sich, vorzugsweise kegelartig, radial erweiternd ausgebildet ist und der zweite Mischkammer-Teilbereich (30) entlang der zweiten Teilbereich-Längsachse (T₂) sich, vorzugsweise kegelartig, radial erweiternd ausgebildet ist, oder/und dass die erste Teilbereich-Längsachse (T₁) und die zweite Teilbereich-Längsachse (T₂) zueinander angewinkelt angeordnet sind.

13. Mischanordnung nach Anspruch 12,
**dadurch gekennzeichnet, dass** die wenigstens eine erste Eintrittsöffnung (44) in einem Bereich geringerer Radialabmessung des ersten Mischkammer-Teilbereichs (28) und die wenigstens eine erste Austrittsöffnung (48) in einem Bereich größerer Radialabmessung des ersten Mischkammer-Teilbereichs (28) angeordnet sind, oder/und dass die wenigstens eine zweite Eintrittsöffnung (46) in einem Bereich geringerer Radialabmessung des zweiten Mischkammer-Teilbereichs (30) und die wenigstens eine zweite Austrittsöffnung (50) in einem Bereich größerer Radialabmessung des zweiten Mischkammer-Teilbereichs (30) angeordnet sind.

14. Mischanordnung nach Anspruch 12 oder 13,
**dadurch gekennzeichnet, dass** die erste Teilbereich-Längsachse (T₁) und die zweite Teilbereich-Längsachse (T₂) derart zueinander angewinkelt sind, dass ein Abstand der ersten Teilbereich-Längsachse (T₁) und der zweiten Teilbereich-Längsachse (T₂) zueinander in einem Bereich geringerer Radialabmessung des ersten Mischkammer-Teilbereichs (28) und des zweiten Mischkammer-Teilbereichs (30) kleiner ist als ein Abstand der ersten Teilbereich-Längsachse (T₁) und der zweiten Teilbereich-Längsachse (T₂) zueinander in einem Bereich größerer Radialabmessung des ersten Mischkammer-Teilbereichs (28) und des zweiten Mischkammer-Teilbereichs (30).

15. Mischanordnung nach einem der Ansprüche 9-14, sofern auf Anspruch 3 rückbezogen
**dadurch gekennzeichnet, dass** erste Teilbereich-Längsachse (T₁) und die zweite Teilbereich-Längsachse (T₂) zueinander bezüglich der Öffnungsebene (E₁) im Wesentlichen spiegelsymmetrisch angeordnet sind, oder/und dass die erste Teilbereich-Längsachse (T₁) und die zweite Teilbereich-Längsachse (T2) in einer zur Öffnungsebene (E₁) im Wesentlichen orthogonalen Achsebene (E₂) liegen.

16. Mischanordnung nach Anspruch 3 oder einem der Ansprüche 4-15, sofern auf Anspruch 3 rückbezogen,
**dadurch gekennzeichnet, dass** der erste Mischkammer-Teilbereich (28) und der zweite Mischkammer-Teilbereich (30) zueinander bezüglich der Öffnungsebene (E₁) im Wesentlichen spiegelsymmetrisch ausgebildet sind.

17. Mischanordnung nach einem der Ansprüche 1-16, sofern auf Anspruch 9 rückbezogen,
**dadurch gekennzeichnet, dass**:
- an einer Innenseite des den ersten Mischkammer-Teilbereich (28) in Richtung stromaufwärts begrenzenden Wandungsbereichs (32) der stromaufwärtigen Mischkammerbaugruppenwand (2) wenigstens ein bereichsweise um die erste Teilbereich-Längsachse (T₁) sich erstreckendes Strömungsleitelement vorgesehen ist,
oder/und
- an einer Innenseite des den zweiten Mischkammer-Teilbereich (30) in Richtung stromaufwärts begrenzenden Wandungsbereichs (34) der stromaufwärtigen Mischkammerbaugruppenwand (22) wenigstens ein bereichsweise um die zweite Teilbereich-Längsachse (T₂) sich erstreckendes Strömungsleitelement vorgesehen ist,
oder/und
- an einer Innenseite des den ersten Mischkammer-Teilbereich (28) in Richtung stromabwärts begrenzenden Wandungsbereichs (36) der stromabwärtigen Mischkammerbaugruppenwand (24) wenigstens ein bereichsweise um die erste Teilbereich-Längsachse (T₁) sich erstreckendes Strömungsleitelement (52) vorgesehen ist,
oder/und
- an einer Innenseite des den zweiten Mischkammer-Teilbereich (30) in Richtung stromabwärts begrenzenden Wandungsbereichs (38) der stromabwärtigen Mischkammerbaugruppenwand (24) wenigstens ein bereichsweise um die zweite Teilbereich-Längsachse sich erstreckendes Strömungsleitelement (54) vorgesehen ist.

18. Mischanordnung nach einem der Ansprüche 1-17, sofern auf Anspruch 9 rückbezogen,
**dadurch gekennzeichnet, dass**:
- an dem den ersten Mischkammer-Teilbereich (28) in Richtung stromaufwärts begrenzenden Wandungsbereich (32) der stromaufwärtigen Mischkammerbaugruppenwand (22) ein in Richtung auf eine Innenseite der Abgasführungskomponente (16) sich zu erstreckendes und wenigstens eine erste Eintrittsöffnung (44) begrenzendes Strömungsleitelement (54; 64) vorgesehen ist,
oder/und
- an dem den zweiten Mischkammer-Teilbereich (30) in Richtung stromaufwärts begrenzenden Wandungsbereich (34) der stromaufwärtigen Mischkammerbaugruppenwand (22) ein in Richtung auf die Innenseite der Abgasführungskomponente (16) sich zu erstreckendes und wenigstens eine zweite Eintrittsöffnung (46) begrenzendes Strömungsleitelement (58; 66) vorgesehen ist.

19. Abgasanlage für eine Brennkraftmaschine, umfassend wenigstens eine Abgasbehandlungsanordnung (12) und stromaufwärts wenigstens einer Abgasbehandlungsanordnung (12) eine Mischanordnung (14) nach einem der Ansprüche 1-18.
